# EUROPEAN PATENT APPLICATION

(11) **EP 0 601 631 A1**
(43) Date of publication of application: **15.06.1994**
(21) Application number: 93203342.6
(22) Date of filing: 30.11.1993
(51) Int. Cl.: C08L 23/16, A61J 1/00

(54) **Container made from a polyethylene composition**

(30) Priority: 04.12.1992 BE 9201066
(71) Applicant: DSM N.V., NL-6411 TE Heerlen (NL)
(72) Inventor: van de Walle, Lucas Evaristus J.M., NL-6142 BC Sittard (NL)

(57) **Abstract**

The invention relates to a container made from a polyethylene composition comprising a mixture of two types of polyethylene, the polyethylene composition comprising 50-80% of a predominantly linear homo- or copolymer of ethylene with one or more α-olefins with 3-12 C-atoms and optionally one or more non-conjugated dienes with a density between 920 and 965 kg/m³ (LLDPE) and 20-50% of a branched polyethylene, prepared according to a radical high-pressure polymerization process, with a density between 915 and 935 kg/m³ (LDPE).

## Description

The invention relates to a container made from a polyethylene composition comprising a mixture of two types of polyethylene.

Such a container is already known from Japanese patent application No. J3-168231. The container disclosed in said application is made from a polyethylene composition comprising 50-97 wt.% of a very low density polyethylene, also referred to as VLDPE, and 3-50 wt.% of low density polyethylene, also referred to as LDPE. Drawbacks of such a polymer composition are the poor stiffness and consequently a poor dimensional stability of the containers produced thereof and the moderate temperature resistance. Such a container cannot, for instance, be sterilized at elevated temperatures, i.e. above 110°C, so that a longer sterilization time is needed in order to meet the required sterilization standards. From an economic point of view a long sterilization time is very disadvantageous for the user or producer of sterile containers.

The object of the invention is to provide a container that does not have the above-mentioned drawbacks.

This object is achieved in that the container is made from a polyethylene composition comprising 50-80% of a substantially linear homo- or copolymer of ethylene with one or more α-olefins with 3-12 C atoms and optionally one or more non-conjugated dienes, with a density between 920 and 965 kg/m³ (LLDPE), and 20-50% of a branched polyethylene, prepared according to a radical high-pressure polymerization process, with a density between 915 and 935 kg/m³ (LDPE).

Thus it is achieved that the container made from this polyethylene composition is dimensionally stable at elevated temperatures. This means that the container can be sterilized at temperatures in excess of 110°C, and even in excess of 115°C, resulting in shorter sterilization times and hence shorter cycle times. This container has a good impact strength and good optical properties, without this having any adverse effect on the processing properties of the polyethylene composition from which the container is made. These factors make this container eminently suitable for use for medical and pharmaceutical purposes.

A polyethylene composition comprising an LLDPE and an LDPE is known in itself. EP-A-377121, for instance, discloses such a composition. In said patent application, however, the composition is used only for the preparation of films for flexible packaging applications. The patent application neither states nor suggests that such a polyethylene composition is very suitable for the manufacture of especially blow moulded containers which, in addition, should be resistant to high temperatures.

LLDPE used in the polyethylene composition according to the invention is understood to be a linear polyethylene having a density between 920 and 965 kg/m³. This is a homo- or copolymer of ethylene with one or more α-olefins with 3-12 C atoms and optionally one or more non-conjugated dienes. The α-olefins that are particularly suitable are propylene, 1-butene, 1-hexene, 4-methyl 1-pentene and 1-octene. Suitable dienes are, for example, 1,7-octadiene and 1,9-decadiene. LLDPE has mainly short side chains and the number of long side chains is considerably lower than in LDPE. Such linear ethylene copolymers can be produced using transition metal catalysts, preferably using so-called Ziegler-Natta catalysts. This type of catalyst is used in particular in solution polymerization processes, in which process the polymerization of ethylene and comonomer, if any, takes place at a temperature above the dissolution temperature of the polyethylene formed. Such polymerization processes are described in, for instance, EP-B-126515 or EP-B-280352.

The LDPE used in the polyethylene composition according to the invention is produced in the customary manner in a high-pressure process using one or more radical initiators. This process results in a polyethylene with long side chains, for which reason it is also called branched polyethylene.

The properties of the container made from the polyethylene composition, such as impact strength, toughness, etc., can be controlled by varying the LLDPE to LDPE ratios.

Preferably, the polyethylene composition comprises 60-80% LLDPE and 20-40% LDPE, in particular 65-75% LLDPE and 25-35% LDPE. In that case the processing properties and temperature resistance are optimum.

The density of the LLDPE (measured according to ASTM D 792-66) is preferably between 930 and 940 kg/m³, and that of the LDPE is preferably between 920 and 930 kg/m³.

The melt indexes (measured according to ASTM D 1238, condition E) of the LLDPE and the LDPE are preferably between 0.1 and 4 dg/min, in particular between 1 and 2.5 dg/min. Within this melt index range the processing properties and toughness are optimum, while they decrease beyond said limits.

The polyethylene composition may also comprise other components such as nucleating agents, thermal and UV-stabilisers, antistatics, lubricants, anti-oxidants, anti-block agents, pigments, fillers, etc.

The two polyethylenes can be mixed in a customary manner, for instance by tumbling polyethylene granulates or polyethylene powders, by using a Henschel mixer, or compounding those in a Banbury or extrusion-kneading device. It is also quite possible to feed the LLDPE and LDPE, in the desired ratio, direct, without prior mixing, to the extrusion device, which is generally used for processing of polyethylene into articles. Within the customary time and temperature ranges the mixing method is not critical for the invention.

It has been found that the polyethylene composition as described here is eminently suitable for the so-called blow-form-fill-seal process. According to this process, the polymer composition is first melted, and from the melt a tube is blown. Sterile air is then used to force this tube against a mould, upon which the container, for example a bottle, is formed. The container is subsequently filled with a predetermined amount of liquid using a dosing unit. Following this, the container is vacuum sealed. This is effected, for instance, in the Bottelpack® machines of Rommelag®. The entire process takes place under sterile conditions. The cycle time of this process is about 10-15 seconds.

Besides the blow-form-fill-seal principle there is also the fill-seal principle, according to which finished containers are filled up and sealed by producers of intravenous or parenteral liquids.

An important factor in the blow-form-fill-seal processing technique, in which all process steps, including bottle filling, take place in one and the same process cycle, is that, when still warm, the polymer composition must be able to accommodate a certain weight without the container losing its shape. Cooling of the container would involve too long a waiting period, and thus prolong the cycle time and increase costs. It is therefore attempted to keep the waiting time between container moulding and filling as short as possible. This can be realized only if the hot container is strong enough to withstand the sudden impact of the contents. This strength is indicated as hot tack.

Afterwards, the filled containers can, for the sake of safety, be resterilized by means of steam sterilization. This depends on the country where the containers are going to be used. Each country has its own requirements as regards medical/pharmaceutical containers. To meet these requirements, the containers must be able to withstand high sterilization temperatures for a certain period of time.

The containers can be filled with liquids for parenteral or intravenous administration, such as liquid feed, isotonic salt solutions and the like. Solutions with medicines also can be administered by means of dosing systems using the container.

The invention will be elucidated with reference to the following examples, without being limited thereto. The density (d) was measured according to ASTM D 792-66, the melt index (MI) according to ASTM D 1238, condition E. The modulus of elasticity, or E-modulus (E-mod) an indication for the stiffness, was measured according to ASTM D 790 (I/B) and the tensile strength according to ISO 1184 H on moulded specimens, the relevant data being presented in Table I. The resulting containers, filled with pyrogen-free water, were sterilized for some minutes in an autoclave; the temperatures are given in Table I.

### Example I

An LLDPE of the type Stamylex 4026® of DSM (d = 935 kg/m³), MI = 1.9 dg/min), was mixed with an LDPE of the type Stamylan LD 2602TH00^{R} of DSM (d = 926 kg/m³, MI = 1.9 dg/min) in a ratio of 75/25 in a tumbler.
The resulting mixture was then extruded on a blow-form-fill-seal line of a Bottelpack® from Rommelag® at a temperature of 160°C and finally formed into a bottle, which was then filled with pyrogen-free water.
Upon sterilization the dimensional stability of the bottle proved to be good.

### Example II

Stamylex 4026® was mixed with Stamylan LD 2602TH00® as in Example I, in a ratio of 70/30. Processing into a bottle took place in the same way as in Example I. The bottle retained its shape during sterilization.

### Example III

Stamylex 3026® of DSM, an LLDPE (d = 932 kg/m³, MI = 2.1 dg/min) was mixed in a ratio of 70/30 with Stamylan LD 2602TH00® and mixed and processed as in Example I. The dimensional stability of the bottle during sterilization proved to be good.

### Comparative experiment A

A VLDPE of the type Teamex TMX 1000F® of DSM (d = 902 kg/m³, MI = 3.0 dg/min), was mixed with an LDPE as described in Example I in a ratio of 75/25, and processed as in Example I. Upon sterilization at a temperature of 110°C the bottle proved to collapse.

**TABLE I**

| example/comparative experiment | sterilization temperature °C | E-mod N/mm² | tensile strength N/mm² |
|---|---|---|---|
| I | 117 | 560 | 20 |
| II | 116 | 530 | 19 |
| III | 113 | 485 | 17 |
| A | 110 | 130 | -⁻¹ |

| | | | |
|---|---|---|---|
| 1) not measured | | | |

## Claims

1. Container made from a polyethylene composition comprising a mixture of two types of polyethylene, characterized in that the polyethylene composition comprises 50-80% of a substantially linear homo- or copolymer of ethylene with one or more α-olefins with 3-12 C-atoms and optionally one or more non-conjugated dienes with a density between 920 and 965 kg/m³ (LLDPE) and 20-50% of a branched polyethylene, prepared according to a radical high-pressure polymerization process, with a density between 915 and 935 kg/m³ (LDPE).

2. Container according to claim 1, characterized in that the polymer composition comprises 60-80% LLDPE and 20-40% LDPE.

3. Container according to either of claims 1 and 2, characterized in that the polymer composition comprises 65-75% LLDPE and 25-35% LDPE.

4. Container according to any one of claims 1-3, characterized in that the LLDPE has a density between 930 and 940 kg/m³.

5. Container according to any one of claims 1-4, characterized in that the LDPE has a density between 920 and 930 kg/m³.

6. Container according to any one of claims 1-4, characterized in that the melt indexes of the LLDPE and the LDPE are between 0.1 and 4 dg/min.

7. Container according to claim 5, characterized in that the melt indexes of the LLDPE and the LDPE are between 1 and 2.5 dg/min.

8. Container according to any one of claims 1-6, characterized in that the container is made according to the blow-form-fill-seal process, the polymer composition being melted, blown, formed into a container, filled and sealed in one process cycle.

9. Use of the container according to any one of claims 1-8 for medical and pharmaceutical purposes.
